(19) **Europäisches Patentamt**
**European Patent Office**
**Office européen des brevets**

(11) **EP 2 442 127 A1**

(12) **EUROPEAN PATENT APPLICATION**

(43) Date of publication:
**18.04.2012 Bulletin 2012/16**

(51) Int Cl.:
**G01S 1/00** *(2006.01)*　　**G01S 19/34** *(2010.01)*

(21) Application number: **12000161.5**

(22) Date of filing: **28.06.2004**

(84) Designated Contracting States:
**AT BE BG CH CY CZ DE DK EE ES FI FR GB GR HU IE IT LI LU MC NL PL PT RO SE SI SK TR**

(30) Priority: **27.06.2003 US 483093 P**

(62) Document number(s) of the earlier application(s) in accordance with Art. 76 EPC:
**04756385.3 / 1 639 839**

(71) Applicant: **Qualcomm Incorporated**
**San Diego CA 92121-1714 (US)**

(72) Inventors:
 • **Roh, Mark**
 **San Diego, California 92121-1714 (US)**

 • **Ristic, Borislav**
 **San Diego, California 92122 (US)**

(74) Representative: **Carstens, Dirk Wilhelm et al**
**Wagner & Geyer**
**Gewürzmühlstrasse 5**
**80538 München (DE)**

Remarks:
This application was filed on 12-01-2012 as a divisional application to the application mentioned under INID code 62.

(54) **Apparatus and method for reducing power consumption in a position-determination device**

(57)　A system for optimizing power use in a wireless communication device includes a selectively activated first timer which has a first level of power consumption and which generates a first time signal with a first level of accuracy. A selectively activated second timer has a second level of power consumption, less than the first level of power consumption, generates a second time signal with a second level of accuracy less than the first level of accuracy. A selectively activated position determination receiver has a third level of power consumption, and receives signals that permit position determination using the received signals and either the first or the second time signal. A selection processor selectively activates either the first or the second timer for use with the position determination receiver to optimize power consumption of the wireless communication device.

**EP 2 442 127 A1**

**Description**

BACKGROUND

Technical Field

This disclosure relates generally to a position determination device and, more particularly, to techniques for reducing power consumption in a position-determination device.

Related Art

Position determination devices are enjoying widespread use. One position determination system is the Global Positioning System (GPS). The GPS employs an array of satellites whose positions in orbit are known. The satellites transmit timing signals that are detected by a GPS receiver. If the GPS receiver can detect signals from several satellite vehicles (SVs), it is possible to accurately determine the position of the GPS receiver.

In many applications, the GPS receiver is a battery-powered, hand-held device. In such devices, it is desirable to minimize power consumption to conserve battery power. In some applications, the GPS receiver is placed in a "sleep" mode to reduce power consumption. However, the longer a GPS receiver is in a sleep mode, the longer it may take to acquire a sufficient number of SVs and determine an accurate position fix.

Thus, there is a need for an improved apparatus and method that will reduce power consumption in a position determination device, while providing the desired level of position determination accuracy.

SUMMARY

In an exemplary embodiment, a system for optimizing electrical power use has a selectively activated first timer having a first level of power consumption and generating a first time signal with a first level of accuracy when selectively activated. A selectively activated second timer has a second level of power consumption less than the first level of power consumption and generates a second time signal with a second level of accuracy less than the first level of accuracy when it is selectively activated. A selectively activated position determination receiver has a third level of power consumption to receive signals that permit position determination and uses the received signals and either the first or second time signal to determine a position of a wireless device when selectively activated. A selection processor selectively activates either the first or second timer for use with the position determination receiver to optimize power consumption in the wireless device. The position determination receiver may be, for example, a global positioning system (GPS) receiver.

In another embodiment, the selection processor estimates a time for the position determination receiver to determine position using the first timer and a time for the position determination processor to determine position using the second timer and selects either the first or second timer based on the power consumption associated with the estimates. The selection processor may also consider the time until the next position determination when selecting which timer should be selectively activated.

BRIEF DESCRIPTION OF THE DRAWING

Fig. 1 is a block diagram illustrating an exemplary embodiment of a system for reducing power consumption in a position-determination device.
Fig. 2 is a flow chart illustrating an example of the operation of the system of Fig. 1.

DETAILED DESCRIPTION

A typical GPS receiver contains an accurate time base. The relative speed with which the position of the GPS receiver may be determined is dependent, in part, on the accuracy of the time base. The disadvantage of a highly accurate time base is that it generally consumes more power than other timers within the GPS receiver. As will be discussed in detail below, the present disclosure is directed to techniques for selecting a clock source for the GPS receiver based on a variety of factors. Although references herein will be made to a "GPS receiver", the principles described herein apply generally to any position determination system. In addition to the US Global Positioning System(GPS), for example, other systems include the Russian Glosnass System, the planned European Galileo System, or any other Satellite Positioning System (SPS).

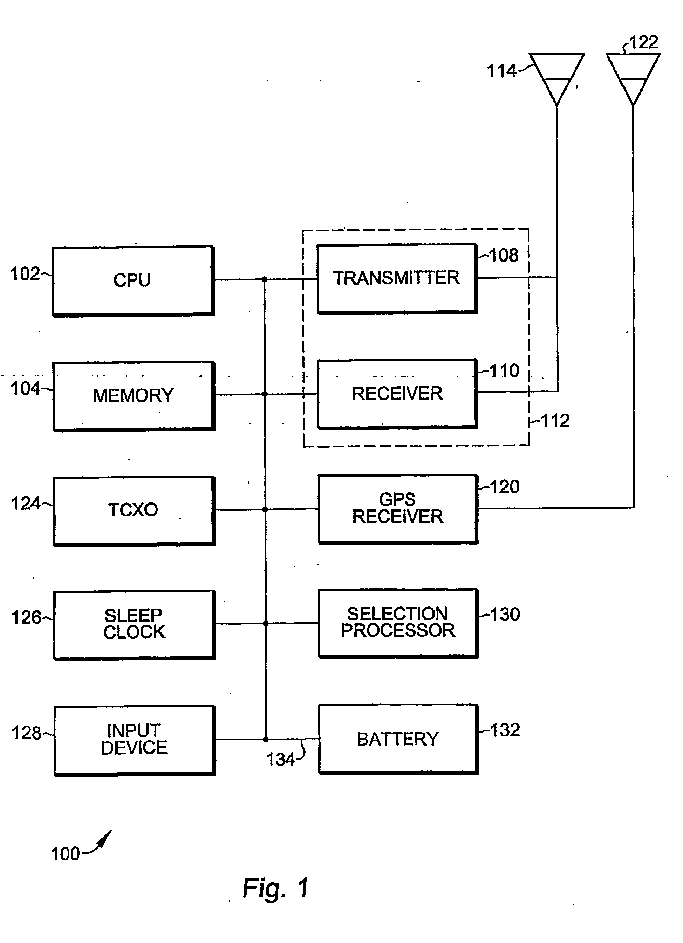

A position determination device, such as a GPS receiver is embodied in a system 100 illustrated in FIG. 1. The system 100 includes a central processing unit (CPU) 102, which controls operation of the system. The CPU 102 is intended to encompass any processing device capable of operating the communication system. This includes microprocessors, embedded controllers, application-specific integrated circuits (ASICs), digital signal processors (DSPs), state machines, dedicated discrete hardware, or the like. It is not intended that the CPU 102 be limited to any particular type of hardware component implementation.

The system also includes a memory 104. The memory 104 is intended to encompass any suitable memory type, which may include read-only memory (ROM), random access memory (RAM), or both. A portion of the memory 104 may also include nonvolatile random access memory. The memory 104 provides instructions and data to the CPU 102.

The system 100 can be implemented as a stand-alone GPS receiver or implemented as part of a wireless communication device, such as a cellular telephone. If implemented as part of a wireless communication device, the system 100 includes a transmitter 108 and a receiver. 110 to allow transmission and reception of data, such as audio communications, between the system 100 and a remote location. The transmitter 108 and receiver 110 may be combined into a transceiver 112. An antenna 114 is coupled to the transceiver 112. The transmitter 108, receiver 110 and antenna 114 operate in known manner.

The system 100 also comprises a position determination device receiver 120, such as the GPS receiver shown. The GPS receiver 120 is coupled to a GPS antenna 122 in a conventional manner. The antenna 114 and GPS antenna 122 may be implemented separately or integrated into a single antenna using conventional technology.

The operation of the GPS receiver 120 is known. Briefly, the GPS receiver 120 is used in conjunction with an array of satellite vehicles (SVs) whose positions in orbit are known with a high degree of accuracy. The SVs transmit timing data. The GPS receiver 120 detects the timing data from a plurality of satellites and uses the data to determine the latitude, longitude, and altitude of the GPS receiver. The GPS receiver can determine the position with a high degree of accuracy if a sufficient number of SVs are detected.

An accurate time signal used by the GPS receiver generally reduces the amount of time needed to acquire the timing signals from the SVs. The system 100 includes a temperature-compensated crystal oscillator (TCXO) 124 to provide an accurate time base for the GPS receiver 120. However, the power supply requirements for the GPS receiver 120 and TCXO 124 may be significant. The system 100 has a high power consumption when clocked with the TCXO 124. Accordingly, the GPS receiver 120 and TCXO 124 are powered down when power is not needed. The system 100 also includes a sleep clock 126 to provide timing signals when the GPS receiver 120 is not actively acquiring timing signals from the SVs.

The system 100 also includes I/O devices, such as an input device 128 and display (not shown). The input device 128 may be a keypad while the display may be implemented by a liquid crystal display, or the like.

A selection processor 130 is used estimate power consumption of the system using either the TCXO 124 or the sleep clock 126 for the next subsequent position fix to be performed by the GPS receiver 120. The selection processor 130 will selectively activate either the TCXO 124 or the sleep clock 126 to minimize power consumption. Operational details of the selection processor 130 are provided below..

The various components described above are powered by a battery 132 and may also include power regulation circuitry (not shown). In an automobile, or other location where external power is available, power consumption may not be an issue. However, in many applications, the sole power supply for the system 100 is the battery 132. In such instances, it may be desirable to minimize power consumption as much as possible.

The various components described above are interconnected by a bus system 134. The bus system 134 may include a data bus, power bus, control bus, and the like. However, for the sake of clarity, the various busses are illustrated in FIG. 1 as the bus system 134.

The block diagram of FIG. 1 is intended to illustrate the system 100 at a functional level. Thus, some functional blocks or portions thereof may be implemented by a set of software instructions stored in the memory 104 and executed by the CPU 102. For example, the selection processor 130 may be implemented by program steps stored in the memory 104 and executed by the CPU 102. However, the selection processor 130 is illustrated in the functional block diagram of FIG. 1 because it performs a separate function.

The system 100 includes an accurate time source in the TCXO 124 and a low power sleep clock 126. If the sleep clock 126 is used instead of the TCXO 124, time uncertainty grows more rapidly. This may result in a longer subsequent GPS session to make an accurate position determination. This longer GPS session consumes more energy. The system 100 is designed to minimize current consumption. Accordingly, in considering the current consumption of the GPS receiver 120 the clock current consumption of either the TCXO 124 or the sleep clock 126 are considered.

The system 100 performs an optimization routine to minimize power drain on the battery 132. The current consumption by the GPS receiver 120, TCXO 124, and sleep clock 126 is estimated based on a GPS fix rate (i.e., the frequency of GPS position determination procedures), signal conditions, and precomputed current consumption estimates. At the conclusion of position fix, the system 100 estimates the current consumption until the end of the next subsequent position fix, including the estimated duration of the position fix by the GPS receiver 120 and the current consumed between position fixes. A first current consumption estimate is calculated assuming that the operation of the TCXO 124 is between position fixes and a separate, second current estimate is calculated assuming use of the sleep clock 126 between position fixes. The time required by-the GPS receiver 120 to perform a position fix is based in part on time uncertainty. Use of the sleep clock 126 will generally increase time uncertainty and thus require a longer period of operation of the GPS receiver 120 to perform a position fix. Alternatively, use of the more accurate but higher powered TCXO 124 increases power consumption by the clock circuit, but may result in a lower position fix time and thus shorter activation period of the GPS receiver 120. The option that minimizes current consumption is selected.

The selection processor 130 (which may, for instance, be implemented by the CPU 102), selectively activates either the TCXO 124 or the sleep clock 126.

The selection processor 130 takes a number of factors into account in estimating current consumption. These include estimates of current consumption for the GPS receiver 120, the TCXO 124 and the sleep clock 126. In addition, the selection processor 130 takes into account the time between position fixes and an estimated duration for the GPS position determination.

The first three quantities may be pre-programmed into the system and stored, for example, in the memory 104. Current consumption in a typical GPS receiver (e.g., the GPS receiver 120) is approximately 120 milliamperes (mA). Current consumption in a typical temperature compensation crystal oscillator (e.g., the TCXO 124) is approximately 27 mA. The current consumption for a typical timer (e.g., the sleep clock 126) is approximately 2.75 mA. These current consumptions, of course, are merely examples of typical circuit components and may vary based on the circuit design and the specific circuit components selected to implement the position determination device. However, it can be generally stated that current consumption in the TCXO 124 is significantly greater than the current consumption in the sleep clock 126, and that power consumption in the GPS receiver 120 is significantly greater than power consumption in either of the clock sources. Both the TXCO and sleep clock are sometimes referred to herein as "timers".

The time between position fixes is typically fixed, based on an application program. For example, the system 100 may be configured to perform a position fix every minute. In addition to the factors described above, the system 100 must estimate the GPS search duration. The system 100 retains information from the current search, including the number of SVs that were searched in "low mode" and the number of SVs in the acquisition assist (AA) data. The AA data is a list of SVs that are expected to be detected by the GPS receiver 120.

A typical GPS receiver (e.g., the GPS receiver 120) operates in a "high mode" and a "low mode". The GPS receiver 120 will initially operate in the high mode in an attempt to detect all SVs listed in the AA data. The GPS receiver does a subsequent search in the low mode to detect signals from the SVs listed in the AA data that were not detected in the high mode. As known, a high mode search takes much less time than searching in the low mode. Accordingly, the system 100 utilizes the number of SVs and the AA data as well as the number of SVs that were searched in the low mode in order to estimate the GPS search duration for the next subsequent position fix.

Another factor considered by the system 100 in estimating the GPS search time is the size of the search windows. Window size is based on time uncertainty and position uncertainty of the GPS receiver 120, and is independent of the number of satellite vehicles in the AA data and of the number of satellite vehicles detected in low mode.. In an exemplary embodiment, the system 100 assumes that the time and position uncertainties are the same with respect to each of the SVs. Accordingly, for purposes of estimating GPS search time, the system 100 assumes that the same window size is used for each SV.

As an example of the estimation of GPS search time, a component of the GPS receiver 120 searches for timing signals from the SV in segments of approximately 32 chips. If a window size is assumed to be 100 chips, it will be necessary to search for segments for each SV in either the high mode or low mode. If, in the present example, 8 satellites were detected in the high mode, and each satellite requires 4 segments of searching, a total of 32 segments need to be searched. A segment search in high mode takes approximately 80 milliseconds (msec), for a total of approximately 2.56 seconds. If 5 satellites were detected in low mode, a total of 20 segments need to be searched, with each search segment requiring approximately 2 seconds, for a total of 40 seconds. Thus, the total estimated search time for this example is approximately 42.5 seconds.

Many devices are capable of searching multiple segments simultaneously, thus reducing the overall acquisition time. For example, the GPS receiver 120 can be configured to allow 8 segments to be searched simultaneously. In this configuration, searching for 8 satellites in high mode takes approximately 320 msec while searching for 5 satellites in the low mode would take approximately 6 seconds. In this manner, the system 100 estimates the GPS search time. It is noted that the system 100 estimates GPS search time using the relatively low time uncertainty provided by the TCXO 124 and the greater time uncertainty of the sleep clock 126. Thus, GPS search time is estimated using each of the time sources.

The system 100 analyzes the various results for the present search and estimates a GPS search duration for the next search using uncertainty characteristics, such as those described above, as well as the time between position fixes. For instance, in general, the system 100 determines the GPS search time estimate and estimates current consumption using the following:

$$I_{tot} = T_{fix} * I_{sleep} + T_{gps} * I_{gps},$$

where $I_{tot}$ is the total current consumption, $T_{fix}$ is the time between position fixes, $I_{sleep}$ is the current consumption used by either the TCXO 124 or the sleep clock 126, $T_{gps}$ is the estimated GPS time that will be required to perform the next position fix using the TCXO 124 or using the sleep clock 126 as the clock source in between position fixes and $I_{gps}$ is the current consumption of the GPS receiver 120.

The selection processor 130 calculates the above equation using the current consumption value for the TCXO 124 and calculates the same equation using the current consumption value for the sleep timer 126. The selection processor 130 also considers the GPS search time utilizing each of the time sources to determine the expected overall power consumption for the next position fix using the TCXO 124 along with the GPS receiver 120 and use of the sleep clock 126 with the GPS receiver. Whichever result produces the lowest value for $I_{tot}$ is selected.

For example, if the selection processor 130 determines that power consumption is better optimized by utilizing the TCXO 124, the system 100 selectively activates the TCXO 124 for operation with GPS receiver 120 during the subsequent position fix and selectively deactivates the sleep clock 126 to reduce power consumption. In this example, the selection processor 130 has determined that the utilization of the TCXO 124 reduces the amount of time required by the GPS receiver 120 to acquire a sufficient number of satellites. Thus, the overall power consumption is minimized.

On the other hand, if the selection processor 130 determines that overall power consumption is less using the sleep clock 126, the system 100 selectively activates the sleep clock 126 for use with the GPS receiver 120 in the subsequent position fix and selectively deactivates the TCXO 124 to reduce power consumption. Thus, again the system 100 optimizes the overall power consumption by selectively activating either the TCXO 124 or the sleep clock 126.

In addition, the GPS receiver 120 is also selectively activated only during position fixes. Selective activation of these various components (e.g., the GPS receiver 120, the TCXO 124 and the sleep clock 126) may be readily performed using control lines from the CPU 102 or instructions transmitted to the selected components by the CPU 102. Other implementations of the control circuitry are readily apparent.

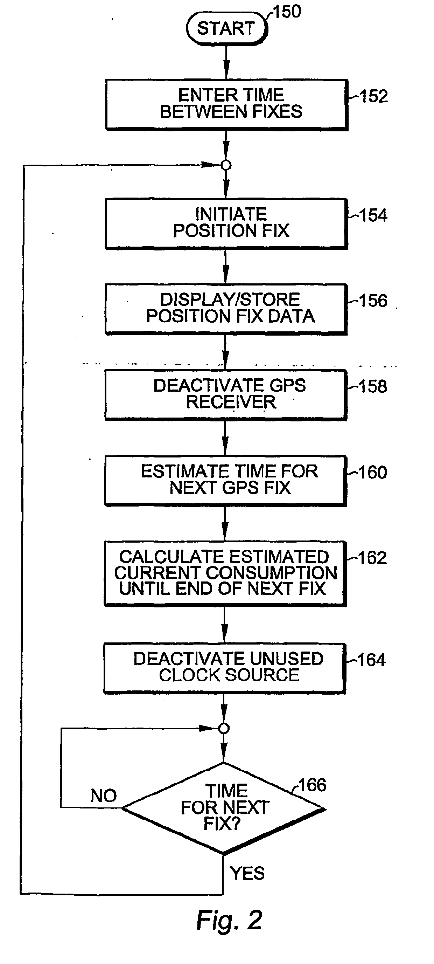

The operation of the system is illustrated in the flowchart of FIG.2, where, at a start 150, the current consumption parameters for the GPS receiver 120, the TCXO 124 and the sleep clock 126 have all been preprogrammed into the system 100. At step 152, the time between position fixes is entered into the system 100. The time between fixes may be set by application software or initiated by a user using, for example, the input device 128 of FIG. 1. If the system 100 detects activation of the input device 128 to initiate a position fix, the system 100 may calculate an average time between position fixes and utilize that data in step 152.

At step 154, the system 100 initiates a position fix by activating the GPS receiver 120. In step 156, the system stores the position fix data acquired by the GPS receiver 120 and may further display the position data on the display (not shown). In step 158 the GPS receiver 120 is deactivated.

In step 160, the system 100 estimates the GPS fix time for the next position fix. As previously discussed, the estimated GPS search time will vary depending on which time source, the TCXO 124 or the sleep clock 126 of FIG.1, is selected. The selection processor 130 also considers the amount of time until the next position fix. If the time until the next position fix is relatively short, the time uncertainty is correspondingly short. Thus, if the time until the next position fix is under a predetermined threshold, the system 100 will selectively activate the sleep clock, since the time uncertainty will not be unacceptably large. Conversely, if the time until the next position fix is above the predetermined threshold, the system 100 may selectively activate the TCXO. However, if the time until the next position fix is exceedingly large, the time uncertainty using the TCXO 124 may be significantly large, and the estimated GPS search time will be long. In that case, the system 100 can selectively activate the sleep clock and conserve power until it is time for the next position fix.

In step 162, the system 100 calculates the estimated current consumption until the end of the next position fix. This includes a calculation using the TCXO 124 and a separate calculation using the sleep clock 126. As described above, the system 100 selects the clock source that provides the least overall current consumption.

In step 164, the system 100 deactivates the clock that will not be used and, in decision 166, the system determines whether it is time for the next position fix. If it is not time for the next position fix, the result of decision 166 is NO and the system returns to decision 166. If it is time for the next position fix, the result of decision 166 is YES. In that case, the system 100 returns to step 154 and initiates a position fix.

Thus, the system 100 optimizes current consumption for the battery 132 by selectively activating circuit components only when necessary and by estimating current consumption utilizing alternative clock sources (e.g. the TXCO 124 and the sleep clock 126 of FIG. 1).

It should be noted that other portions of the system 100 may also use the TCXO 124. For example, the TCXO 124 may be used in the operation of the transceiver 112 (see FIG. 1). If the TCXO 124 is active for other such operations, then the TCXO can be used as the clock source for use with the GPS receiver 120, as well. In that event, the optimization procedure illustrated in the example flowchart of FIG. 2 need not be implemented. Rather, the procedure illustrated in FIG. 2 may be implemented when the system 100 becomes idle. The calculation is performed using the time until the next fix instead of the time between fixes discussed above with respect to the example current consumption equation.

The foregoing described embodiments depict different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components.

Likewise, any two components so associated can also be viewed as being "operably connected", or "operably coupled", to each other to achieve the desired functionality.

Although the invention has been described and illustrated with a certain degree of particularity, it should be understood that the present disclosure has been made by way of example only, and that numerous changes in the combination and arrangement of parts may be resorted to without departing from the spirit and scope of the invention, as hereinafter claimed.

In general, terms used herein are generally intended as "open" terms. For instance, the term "including" should be interpreted as "including but not limited to," the term "includes" should be interpreted as "includes but is not limited to," the term "having" should be interpreted as "having at least", etc.).

It will be further understood that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, such recitation should typically be interpreted to mean at least the recited number (e.g., the bare recitation of "two recitations," without other modifiers, typically means at least two recitations, or two or more recitations).

**FURTHER SUMMARY OF THE INVENTION**

1. A system for optimizing power use in a wireless communication device, comprising:

a selectively activated first timer having a first level of power consumption and generating a first time signal with a first level of accuracy when selectively activated;
a selectively activated second timer having a second level of power consumption less than the first level of power consumption and generating a second time signal with a second level of accuracy less than the first level of accuracy when selectively activated;
a selectively activated position determination receiver having a third level of power consumption to receive signals that permit position determination and to use the received signals and either the first or second time signal to determine a position of the wireless device when selectively activated; and
a selection processor to selectively activate either the first or second timer for use with the position determination receiver to optimize power consumption of the wireless communication device.

2. The system of 1 wherein the position determination receiver is a global positioning system (GPS) receiver.

3. The system of 1 wherein the selection processor determines:

a first estimated time for the position determination receiver to determine a position of the wireless device using the first timer, and
a second estimated time for the position determination receiver to determine a position of the wireless device using the second timer,
the selection processor further calculating:

the first and third levels of power consumption for the first estimated time, and
the second and third levels of power consumption for the second estimated time;
the selection processor selectively activating the first or second timer based on which calculation indicates less power consumption during a position determination.

4. The system of 1 wherein the selection processor compares the first and third levels of power consumption with the second and third levels of power consumption and selectively activates the first or second timer based on the lowest power consumption of the position determination receiver and the selectively activated timer.

5. The system of 1 wherein the selection processor selectively activates the second timer if a time until the next position determination is less than a predetermined time.

6. The system of 1 wherein the first timer comprises a temperature-compensated crystal oscillator.

7. The system of 1 wherein the selection processor selectively activates the first timer if a time until the next position determination is greater than a predetermined time.

8. The system of 1 wherein the position determination receiver receives signals from a plurality of satellite vehicles, the selection processor selectively activating the first or second timer based on a number of satellite vehicles detected by the position determination receiver in a previous position determination.

9. A system for the optimization of electrical power use in a wireless device comprising:

selectively activated first timer means having a first level of power consumption and generating a first time signal when selectively activated; selectively activated second timer means having a second level of power consumption less than the first level of power consumption and generating a second time signal when selectively activated; selectively activated position determination means having a third level of power consumption to receive signals that permit position determination to determine a position of the wireless device using the received signals and either the first or second time signal when selectively activated; and selective activation means for selectively activating either the first or second timer means for use with the position determination means to thereby optimize power consumption in the wireless device.

10. The system of 9 wherein the selective activation means determines a first estimated time to determine the position of the wireless device using the first timer and a second estimated time to determine the position of the wireless device using the second timer, the selective activation means further calculating a first level of power consumption for the first estimated time and a second level of power consumption for the second estimated time and selectively activating the first or second timer means based on which of the first and second timer means will consume less power during a position determination.

11. The system of 9 wherein the selective activation means:

calculates a first estimated time for obtaining a next position determination using the first timer means; calculates a second estimated time for obtaining a next position determination using the second timer means; compares power consumption for the first and second estimated times; and selectively activates the first or second timer based on the lowest power consumption of the position determination means and the selectively activated timer means.

12. The system of 11 wherein the selective activation means further determines an estimate time until a subsequent position determination and selectively activates the first or second timer means based on a determination of lowest power consumption until the completion of the subsequent position determination.

13. The system of 9 wherein the first timer means comprises a temperature-compensated crystal oscillator.

14. The system of 9 wherein the selectively activated position determination means receives signals from a plurality of satellite vehicles when activated, the selective activation means activating either the first or the second timer based on a number of satellite vehicles detected in a previous position determination.

15. A system for optimizing power use in a wireless communication device, comprising:

first and second timers, each having respective different a first and second levels of power consumption, each generating respective a first and second time signals with respective a first and second levels of accuracy; a position determination receiver to receive time signals from either said first or a second time signal source to determine a position of the wireless device; and a selection processor to enable either the first or second time signal source for providing either said first or said second time signals to said position determination receiver to optimize power consumption of the wireless communication device.

16. A system for optimizing power use in a wireless communication device, comprising:

a position determination receiver to receive time signals from either a first or a second enabled time signal source to determine a position of the wireless device; and a selection processor to selectively enable either said first or said second time signal source to provide either said first or said second time signal to said position determination receiver to optimize power consumption of the wireless communication device.

17. A method for optimizing electrical power use in a wireless position determination device comprising:

estimating a first position fix time to determine the position of the wireless position determination device using a first timer;
estimating a second position fix time to determine the position of the wireless position determination device using a second timer;
determining power consumption for a position fix using the first timer;
determining power consumption for a position fix using the second timer; and
selectively activating either the first timer or the second timer for use with the position determination device based on the determinations of power consumption.

18. The method of 17 wherein the first timer has a greater accuracy than the second timer and the first timer has a greater power consumption than the second timer.

19. The method of 17 wherein selectively activating either the first timer or the second timer is based at least in part on an expected time until a next subsequent position fix occurs.

20. The method of 19 wherein the first timer has a greater accuracy than the second timer and the first timer has a greater power consumption than the second timer and selectively activating selectively activates the second timer if expected time until the next subsequent position fix is less than a predetermined time.

21. The method of 19 wherein the first timer has a greater accuracy than the second timer and the first timer has a greater power consumption than the second timer and selectively activating selectively activates the first timer if expected time until the next subsequent position fix is greater than a predetermined time.

22. The method of 19 wherein the first timer has a greater accuracy than the second timer and the first timer has a greater power consumption than the second timer and selectively activating selectively activates the second timer if expected time until the next subsequent position fix is greater than a predetermined time.

23. The method of 17 wherein a position fix is determined by receiving signals from a plurality of satellite vehicles, and selectively activating either the first or second timer is based at least in part on a number of satellite vehicles detected in a previous position fix.

25. A method for optimizing electrical power use in a wireless position determination device comprising:

estimating first and second position fix times to determine the position of the wireless position determination device using respective first and second timers;
determining a first power consumption for said first position fix;
determining a second power consumption for said second position fix; and
selectively activating either the first timer or the second timer for use with the position determination device based on the first and second power consumption determinations to optimize electrical power use in said wireless position determination device.

24. A method for optimizing electrical power use in a wireless position determination device comprising:

determining a first power consumption for a position fix using a first timer;
determining a second power consumption for a position fix using a second timer; and
selectively activating either said first timer or said second timer for use with the position determination device based on the first and second power consumption determinations to optimize electrical power in said wireless position determination device.

## Claims

1. A method for optimizing power use in a wireless communication device, the method comprising:

performing a determination whether expected time between a position fix performed by the wireless communication device and a subsequent position fix is less than a predetermined time interval; and
selectively activating one of a first timer and a second timer based on the determination, the first timer configured to be more accurate than the second timer and to consume more power than the second timer.

2. The method of claim 1, wherein the predetermined time interval is computed based at least on one or more of:

an estimated first total power consumption including at least a first power consumption during an estimated first position fix time and a second power consumption during a time period between consecutive position fixes when the first timer is used, and

an estimated second total power consumption including at least a third power consumption during an estimated second position fix time and a fourth power consumption during the time period between consecutive position fixes when the second timer is used.

3. The method of any of the preceding claims, wherein selectively activating one of the first timer and the second timer comprises:

    selectively activating the second timer when the expected time is less than the predetermined time interval.

4. The method of any of the preceding claims, wherein selectively activating one of the first timer and the second timer comprises:

    selectively activating the first timer when the expected time is greater than the predetermined time interval.

5. The method of any of the preceding claims, wherein the selectively activated first or second timer generates a first or second time signal with a first or second level of accuracy, respectively, said method further comprising:

    selectively activating a position determination receiver to receive signals to perform said position fix based on receive signals that permit position determination and based on either the first or second time signal to determine a position of the wireless device when selectively activated.

6. The method of claim 5, wherein a position fix is determined by receiving signals from a plurality of satellite vehicles, and wherein said selectively activating either the first or the second time is also based in part on a number of satellite vehicles detected in a previous position fix.

7. The method of any of claims 5 or 6, wherein said position determination receiver is a global positioning, GPS, receiver.

8. An apparatus for optimizing power use in a wireless communication device, the method comprising:

    means for performing a determination whether expected time between a position fix performed by the wireless communication device and a subsequent position fix is less than a predetermined time interval; and
    means for selectively activating one of a first timer and a second timer based on the determination, the first timer configured to be more accurate than the second timer and to consume more power than the second timer.

9. The apparatus of claim 8, wherein the means for performing said determination is configured to compute said predetermined time interval based at least on one or more of:

    an estimated first total power consumption including at least a first power consumption during an estimated first position fix time and a second power consumption during a time period between consecutive position fixes when the first timer is used, and
    an estimated second total power consumption including at least a third power consumption during an estimated second position fix time and a fourth power consumption during the time period between consecutive position fixes when the second timer is used.

10. The apparatus of any of claims 8 and 9, wherein the means for selectively activating one of the first timer and the second timer comprises:

    means for selectively activating the second timer when the expected time is less than the predetermined time interval.

11. The apparatus of any of claims 8 to 10, wherein the means for selectively activating one of the first timer and the second timer comprises:

    means for selectively activating the first timer when the expected time is greater than the predetermined time interval.

12. The apparatus of any of claims 8 to 11, wherein the selectively activated first or second timer is configured to generate a first or second time signal with a first or second level of accuracy, respectively, said apparatus further comprising:

    means for selectively activating a position determination receiver configured to receive signals to perform said position fix based on receive signals that permit position determination and based on either the first or second time signal to determine a position of the wireless device when selectively activated.

13. The apparatus of claim 12, wherein a position fix is determined by receiving signals from a plurality of satellite vehicles, and wherein said means for selectively activating either the first or the second time is configured to also base the decision in part on a number of satellite vehicles detected in a previous position fix.

**14.** The apparatus of any of claims 12 or 13, wherein said position determination receiver is a global positioning, GPS, receiver.

**15.** A processor-readable medium including instructions stored thereon, said instructions comprising instructions to carry out the steps of any of claims 1 to 7.

*Fig. 1*

*Fig. 2*

Europäisches
Patentamt

European
Patent Office

Office européen
des brevets

## EUROPEAN SEARCH REPORT

**Application Number**

EP 12 00 0161

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 132 713 A1 (MATSUSHITA ELECTRIC IND CO LTD [JP]) 12 September 2001 (2001-09-12) * paragraphs [0021], [0025], [0028] * * paragraphs [0046], [0048], [0053] * ----- | 1-15 | INV. G01S1/00 G01S19/34 |
| Y | US 6 473 607 B1 (SHOHARA AKI [US] ET AL) 29 October 2002 (2002-10-29) * column 12, lines 19-56 * * column 16, line 61 - column 14, line 24 * ----- | 1-15 | |
| A | US 5 629 708 A (RODAL ERIC B [US] ET AL) 13 May 1997 (1997-05-13) * the whole document * ----- | 1-15 | |

| | TECHNICAL FIELDS SEARCHED (IPC) |
|---|---|
| | G01S H04W |

The present search report has been drawn up for all claims

| Place of search | Date of completion of the search | Examiner |
|---|---|---|
| The Hague | 6 March 2012 | Naddeo, Giovanni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 12 00 0161

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2012

| Patent document cited in search report | | Publication date | Patent family member(s) | | Publication date |
|---|---|---|---|---|---|
| EP 1132713 | A1 | 12-09-2001 | EP | 1132713 A1 | 12-09-2001 |
| | | | JP | 3488144 B2 | 19-01-2004 |
| | | | JP | 2001059738 A | 06-03-2001 |
| | | | US | 6448927 B1 | 10-09-2002 |
| | | | WO | 0114832 A1 | 01-03-2001 |
| US 6473607 | B1 | 29-10-2002 | US | 6473607 B1 | 29-10-2002 |
| | | | US | 2003119503 A1 | 26-06-2003 |
| US 5629708 | A | 13-05-1997 | US | 5594453 A | 14-01-1997 |
| | | | US | 5629708 A | 13-05-1997 |

EPO FORM P0459

For more details about this annex : see Official Journal of the European Patent Office, No. 12/82